# EUROPEAN PATENT APPLICATION

(11) **EP 2 733 004 A2**
(43) Date of publication of application: **21.05.2014**
(21) Application number: 13190115.9
(22) Date of filing: 24.10.2013
(51) Int. Cl.: B60K 37/00, B60K 37/02

(54) **Information display system for vehicle and information display control apparatus for vehicle**

(30) Priority: 08.11.2012 JP 2012246452
(71) Applicant: Honda Motor Co., Ltd., Tokyo 107-8556 (JP)
(72) Inventor: Aoki, Koji, Saitama, 351-0193 (JP); Ishida, Yoshimitsu, Saitama, 351-0193 (JP); Nakayama, Masaru, Saitama, 351-0193 (JP)
(74) Representative: Prechtel, Jörg

(57) **Abstract**

An information display system for a vehicle, including an information display control apparatus and a tablet-type terminal device. The vehicle is provided with a vehicle meter for indicating the vehicle meter information in front of a driver's seat of the vehicle, and a terminal device holder which is capable of mounting the tablet-type terminal device so that the tablet-type terminal device covers the vehicle meter. The information display control apparatus performs display control for displaying the vehicle meter information and the functional information on a display screen of the tablet-type terminal device, when the tablet-type terminal device is mounted on the terminal device holder. The information display control apparatus performs a display control so that the functional information displayed in a second display region is switched while the display of the vehicle meter information in a first display region is maintained.

## Description

### BACKGROUND OF THE INVENTION

### Field of the Invention

The present invention relates to an information display system for a vehicle and an information display control apparatus for a vehicle, for displaying information in front of the driver's seat of the vehicle, and particularly to a system and a control apparatus which perform a control for displaying a plurality kinds of information on a single display screen, the displayed information including vehicle information regarding a vehicle condition such as a vehicle running speed, and functional information such as map information.

### Description of the Related Art

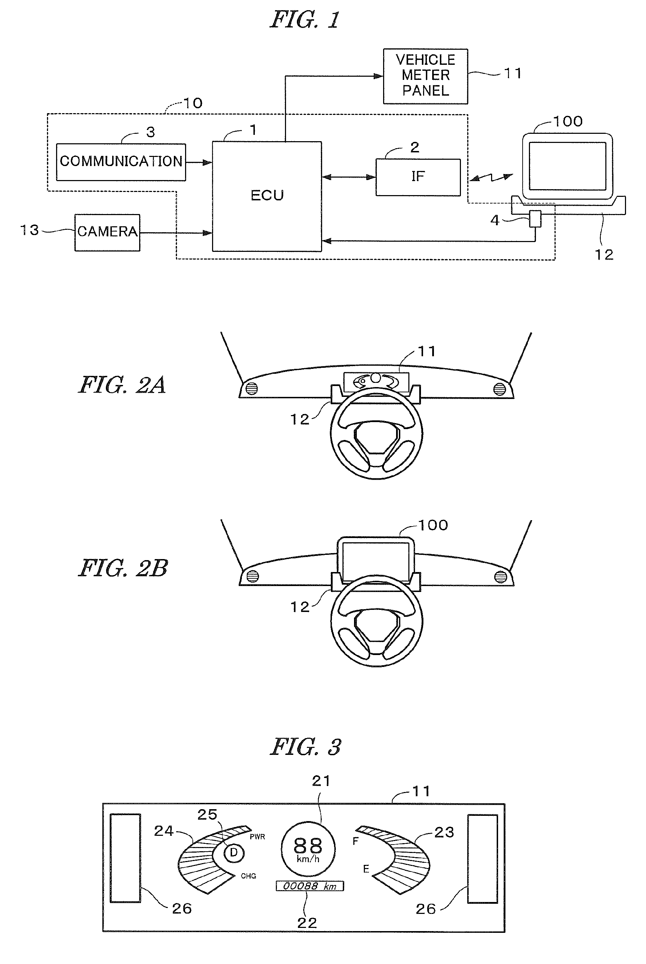

Japanese Patent Publication No. 4510019 (JP'019) discloses a display apparatus for a vehicle which displays the vehicle information indicative of the vehicle condition such as a vehicle speed and the navigation information on a single display screen. According to this apparatus, as shown in FIG. 1 of JP'019, an engine rotational speed and a vehicle speed are displayed near the center of the screen, the navigation information is displayed on the left side of the screen, and a shift lever position, an engine coolant temperature, and a fuel amount are displayed on the right side of the screen.

In recent years, a mobile tablet-type personal computer has been started to be used widely, and navigation programs directed to such mobile terminal devices have also been started to be used widely. Accordingly, the mobile terminal device can be used as a low-cost vehicle navigation device by bringing it into the vehicle. In view of such recent technological trend, there is a room for improvement in the display device shown in JP'019

### SUMMARY OF THE INVENTION

The present invention was made contemplating the above described point, and an objective of the present invention is to provide an information display system for a vehicle and an information display control apparatus for a vehicle, which effectively uses a tablet-type terminal device to display vehicle meter information indicative of a vehicle running condition and the like, and another functional information on a single display screen, thereby making it possible to enhance convenience of the vehicle users.

To attain the above objective, the present invention provides an information display system for a vehicle, including an information display control apparatus (10) and a tablet-type terminal device (100). The information display control apparatus (10) performs control for displaying vehicle meter information regarding a condition of the vehicle, and a plurality of kinds of functional information including map information. The vehicle is provided with a vehicle meter (11) for indicating the vehicle meter information in front of a driver's seat of the vehicle, and terminal device mounting means (12) which is capable of mounting the tablet-type terminal device (100) so that the tablet-type terminal device covers the vehicle meter (11). The tablet-type terminal device (100) has command receiving means for receiving a switching command of the functional information. The information display control apparatus (10) performs control of data transmission to and from the tablet-type terminal device (100) and display control for displaying the vehicle meter information and the functional information on a display screen of the tablet-type terminal device (100), when the tablet-type terminal device (100) is mounted on the terminal device mounting means (12). The information display control apparatus (10) performs the display control so that the vehicle meter information is displayed in a first display region (RD1) of the display screen of the tablet-type terminal device (100), and the functional information is displayed in a second display region (RD2) of the display screen. The information display control apparatus (100) performs the display control so that the functional information displayed in the second display region (RD2) is switched while the display of the vehicle meter information is maintained, when the command receiving means receives the switching command.

With this configuration, the tablet-type terminal device can be mounted so that the tablet-type terminal device covers the vehicle meter which is disposed in front of the driver's seat and indicates the vehicle meter information regarding the vehicle condition. In the state where the tablet-type terminal device is mounted, the vehicle meter information is displayed in the first display region of the display screen of the tablet-type terminal device, and the functional information such as the map information is displayed in the second display region thereof. When the switching command of the functional information is received, switching of the functional information (such as the map information, audio-device operating information, air conditioner operating information, an image obtained by a camera mounted on the vehicle, etc.) is performed. Accordingly, switching to a desired functional information image can easily be performed without using complex menu layers in the display screen of a limited display area, which enhances convenience of the vehicle users.

Preferably, the information display control apparatus (100) changes a form of the boundary (BL1 - BL4) between the first display region (RD1) and the second display region (RD2) according to the functional information to be displayed in the second display region (RD2).

With this configuration, the form of the boundary between the first and second display region is changed according to the functional information to be displayed in the second display region. Accordingly, the display region form can be adjusted to a form suitable for the functional information to be displayed.

Preferably, when displaying the map information in the second display region (RD2), the information display control apparatus displays the vehicle meter information on the upper side of the display screen and displays the map information below the vehicle meter information. Further, the information display control apparatus displays the boundary (BL1) between the vehicle meter information and the map information so that the boundary forms an upward convex arc.

With this configuration, when displaying the map information in the second display region, the vehicle meter information is displayed on the upper side of the display screen and the map information is displayed below the vehicle meter information. In addition, the boundary between the vehicle meter information and the map information is displayed so that the boundary forms an upward convex arc. Accordingly, the display region for the map information can be ensured in the display screen of limited area of the tablet-type terminal device while displaying the vehicle meter information as essential information. Further, displaying the boundary with a form of the upward convex arc makes it possible to perform the display with realistic feeling.

Preferably, the command receiving means receives the switching command by detecting a moving direction of a hand moved in front of the tablet-type terminal device (100), and the information display control apparatus (10) switches the functional information to be displayed in the second display region (RD2) according to the detected direction of the hand movement.

With this configuration, the switching command is received by detecting a moving direction of the hand moved in front of the tablet-type terminal device, and the functional information to be displayed in the second display region is switched according to the detected direction of the hand movement. According to the tablet-type terminal device, it is possible to detect a flick operation of rapidly moving a finger on the display screen (display panel) and to perform the display image switching according to the direction of the detected hand movement. Alternatively, it is also possible to obtain an image of the hand movement of the vehicle user with a camera and to perform the display image switching according to the direction of the detected hand movement when a predetermined hand movement is detected. Accordingly, switching to the desired functional information can easily be performed.

Preferably, the information display control apparatus (10) starts a communication control program of the tablet-type terminal device (100) when the tablet-type terminal device (100) is mounted on the terminal device mounting means (12), and performs the data transmission control with the communication control program. Further, the started communication control program continues the data transmission control after the tablet-type terminal device (100) is removed from the terminal device mounting means (10).

With this configuration, the communication control program of the tablet-type terminal device is started when the tablet-type terminal device is mounted on the terminal device mounting means, and the data transmission control is performed with the communication control program. Further, the started communication control program continues the data transmission control after the tablet-type terminal device is removed from the terminal device mounting means. Accordingly, a vehicle user seated on the rear seat, for example, can operate the air conditioner or the audio device function through the tablet-type terminal device removed from the terminal device mounting means, which further enhances convenience of the vehicle users.

To attain the above objective, the present invention provides an information display control apparatus (10a) for a vehicle, which performs control for displaying vehicle meter information regarding a condition of the vehicle, and a plurality of kinds of functional information including map information. The vehicle is provided with a vehicle meter (11) for indicating the vehicle meter information in front of a driver's seat of the vehicle, and terminal device mounting means (12) which is capable of mounting a tablet-type terminal device (100) so that the tablet-type terminal device (100) covers the vehicle meter (11). The information display control apparatus (10a) includes command receiving means and terminal device control means. The command receiving means receives a switching command of the functional information. The terminal device control means performs control of data transmission to and from the tablet-type terminal device (100) and display control for displaying the vehicle meter information and the functional information on a display screen of the tablet-type terminal device (100), when the tablet-type terminal device (100) is mounted on the terminal device mounting means (12). The terminal device control means performs the display control so that the vehicle meter information is displayed in a first display region (RD1) of the display screen of the tablet-type terminal device (100), and the functional information is displayed in a second display region (RD2) of the display screen. The terminal device control means performs the display control so that the functional information displayed in the second display region (RD2) is switched while the display of the vehicle meter information is maintained, when the command receiving means receives the switching command.

In this configuration, the command receiving means is provided not in the tablet-type terminal device but in the information display control apparatus. The switching command can be received, for example, by providing a camera in the vicinity of the terminal device mounting means, or by providing a switch for functional information switching on the steering wheel or the instrumental panel of the vehicle. Accordingly, switching to a desired functional information image can easily be performed without using complex menu layers in the display screen of a limited display area, which enhances convenience of the vehicle users.

### BRIEF DESCRIPTION OF THE DRAWINGS

FIG. 1 is a block diagram showing an image display control apparatus for a vehicle according to one embodiment (first embodiment) of the present invention, and its peripheral devices;

FIGs. 2A and 2B illustrate a mounted state of the tablet-type personal computer in the vehicle;

FIG. 3 shows a vehicle meter which indicates a vehicle speed, a mileage, and the like;

FIGs.4A - 4D and 5A - 5D illustrate images displayed on a display screen of the mounted tablet-type personal computer;

FIG. 6 is a flowchart of a process for performing display control of the display screen of the tablet-type personal computer; and

FIG. 7 is a block diagram showing an image display control apparatus for a vehicle according to a second embodiment of the present invention, and its peripheral devices.

### DETAILED DESCRIPTION OF THE PREFERRED EMBODIMENTS

Preferred embodiments of the present invention will now be described with reference to the drawings.

### First Embodiment

FIG. 1 is a block diagram showing a configuration of an image display system for a vehicle, including an image display control apparatus and a tablet-type terminal device according to one embodiment of the present invention. The vehicle in this embodiment is a small electric vehicle provided with a motor as a drive source, and a riding capacity thereof is two persons. The vehicle is provided with an image display control apparatus 10, a vehicle meter panel 11, a PC holder 12, and a camera 13. The vehicle meter panel 11 and the PC holder 12 are disposed in front of the driver's seat as shown in FIG. 2A. The vehicle meter panel 11 indicates vehicle meter information regarding a condition of the vehicle. The PC holder 12 is provided for mounting a tablet-type personal computer (hereinafter referred to as "TAB PC") 100 as a tablet-type terminal device. The camera 13 is provided for obtaining a rearview image of the vehicle.

The vehicle meter panel 11 specifically includes, as shown in FIG. 3, a vehicle speed indication block 21, a mileage indication block 22, a battery charge amount indication block 23, a battery charge/discharge state indication block 24, a shift position indication block 25, and indicator blocks 26. The battery charge/discharge state indication block 24 indicates a charging state or a discharging state of the battery. The shift position indication block 25 indicates a shift position (D-range, R-range, and the like). The indicator blocks 26 indicate an on/off state of the lights of the vehicle, indication corresponding to various warning lights, and the like. The PC holder 12 is disposed, as shown in FIG. 2B, so that the TAB PC 100 can be mounted so as to cover the vehicle meter panel 11.

Returning to FIG. 1, the image display control apparatus 10 includes an electronic control unit (hereinafter referred to as "ECU") 1, an interface block 2, a communication block 3, and an installation sensor 4. The interface block 2 performs data transmission to and from the TAB PC 100. The communication block 3 performs data transmission to and from other control devices such as a motor control device, an audio device controller, an air-conditioner control device, and the like which are provided on the vehicle. The installation sensor 4 detects installation (mounting) of the TAB PC 100 on the PC holder 12.

The interface block 2 performs data transmission to and from the TAB PC 100 by wireless communication (for example, the communication based on short-distance wireless communication standards, such as Bluetooth, Wi-Fi, etc.), if installation of the TAB PC 100 is detected. The installation sensor 4 can be configured using a mechanical switch, or a detector which is configured by combining a light emitting element and a photo accepting unit. The communication block 3 performs data transmission through a LAN (local area network, not shown) in the vehicle.

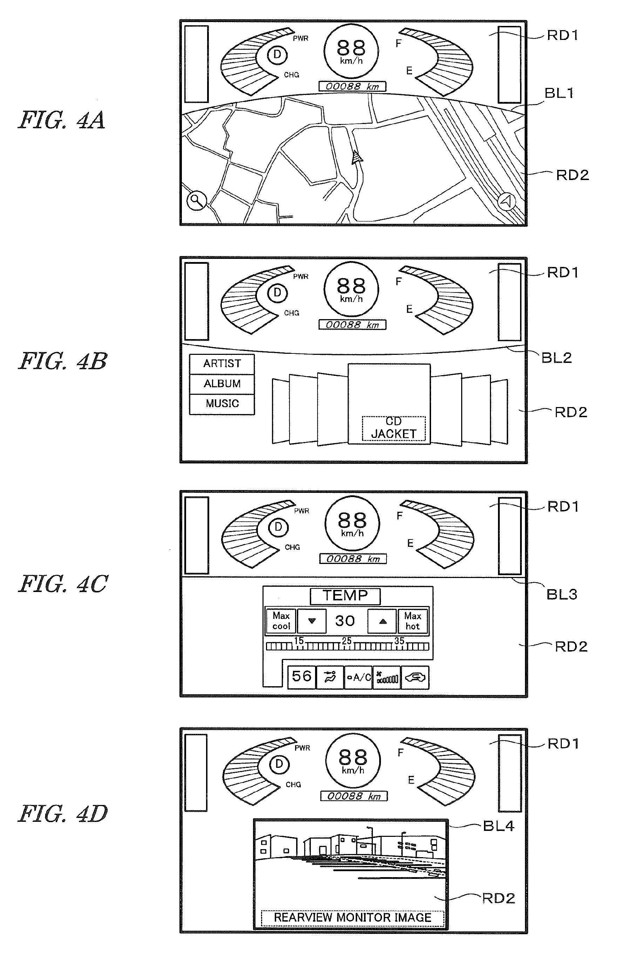

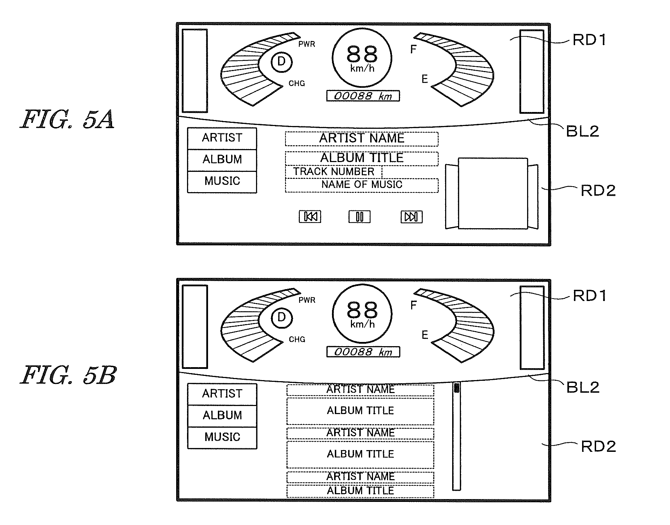

FIGs. 4A - 4D, 5A, and 5B illustrate images displayed on the display screen of the TAB PC 100 in the state where the TAB PC is mounted on the PC holder 12. The images shown in FIGs. 4A - 4D are respectively configured so that the vehicle meter information displayed in the vehicle meter panel 11 is displayed in a first display region RD1 positioned on the upper side of the screen, and the functional information described below is displayed in a second display region RD2 positioned below the first display region. In the second display region RD2 of FIGs. 4A - 4D, map information (a map image), an audio information/operation panel image, an air-conditioner operation panel image, and a rearview monitor image obtained by the camera 13 are respectively displayed. In this specification, the displayed information other than the vehicle meter information, such as the map information (map image), the audio information/operation panel image, the air-conditioner operation panel image, the rearview monitor image, etc. is generically referred to as "functional information".

The image of FIG. 4A shows the map information generated by the navigation program of the TAB PC 100, and the vehicle meter information of the vehicle meter panel 11. In the image of FIG. 4A, the boundary BL1 between the map information and the vehicle meter information is configured as an upward convex arc. According to the display as shown in FIG. 4A, the display region for the map information can be ensured in the display screen of limited area of the TAB PC 100 while displaying the vehicle meter information as essential information. Further, displaying the boundary BL1 with a form of the upward convex arc makes it possible to perform the display with realistic feeling.

In the images shown in FIGs. 4B - 4D, the boundaries BL2 - BL4 between the vehicle meter information and the functional information (the audio information/operation panel image, the air-conditioner operation panel image, the rearview monitor image) are respectively shown as a downward convex arc, a straight line, and a rectangle. Thus, the form of boundaries BL1 - BL4 between the two kinds of information in the image containing the vehicle meter information and another functional information is changed according to the functional information to be displayed. Accordingly, the form of the display region can be selected suitably for the information to be displayed. It is to be noted that the indication of "CD jacket" surrounded by the dashed line in FIG. 4B is written for explaining that the image of a plurality of CD jackets is shown. That is, the characters of "CD jacket" are not actually contained in the displayed image. Also in other figures, the characters surrounded by the dashed line are indicated for explanation.

In this embodiment, switching of the images shown in FIGS. 4A - 4D is performed by flick operation of moving two or more fingers rightward or leftward on the display screen of the TAB PC 100. For example, the switching is performed as follows: the image of FIG. 4A is switched to the image of FIG. 4B by once rightward flick operation, the image of FIG. 4B is switched to the image of FIG. 4C by another rightward flick operation, and the image of FIG. 4C is switched to the image of FIG. 4A by another rightward flick operation.

Further, switching of the displayed images is performed in reverse sequence with respect to the rightward flick operation by once leftward flick operation. In addition, when the shift position of the transmission is operated to the reverse position in the state where the image of FIG. 4A, 4B, or 4C is displayed, the displayed image is automatically changed to the image of FIG. 4D, and when the shift position is operated from the reverse position to another position, the displayed image is automatically returned to the original image of FIG. 4A, 4B, or 4C. According to this switching operation, switching to a desired image can simply be performed without performing a complicated menu display in the display screen of limited area.

In the map information image shown in FIG. 4A, upward, downward, leftward, or rightward movement of one finger (single finger) on the display screen of the TAB PC 100 moves the displayed position of the map in the direction of the single finger movement, and reduction or expansion of a displayed area of the map is performed by operation (pinch operation) of narrowing or widening an interval of two fingers on the display screen.

The audio information image of FIG. 4B shows CD albums which can be played back, and operation of rightward or leftward single finger movement on the display screen of TAB PC 100 makes it possible to review the stored albums and to select one of them. Further, by pushing (touching by a finger) the "music" button contained in the image of FIG. 4B, the displayed image is switched to the image shown in FIG. 5A, which enables to play the shown music. Further, pushing the "artist" button switches the displayed image to the image of FIG. 5B, in which an album title list corresponding each artist is shown.

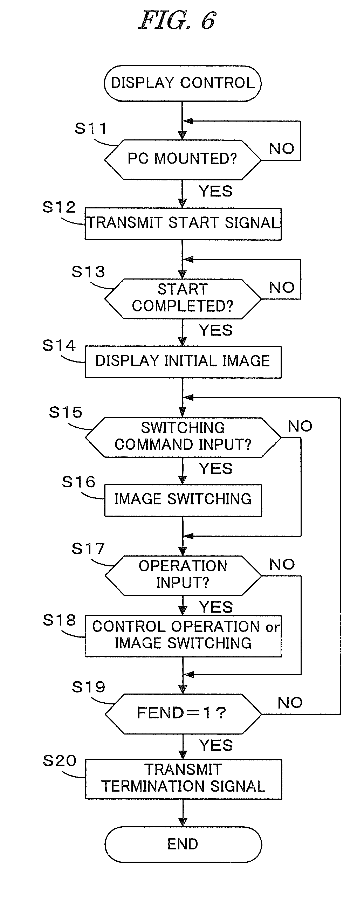

FIG. 6 is a flowchart showing a sequence of a process for performing the image display control described above. This process is executed in the ECU 1.

In step S11, it is determined whether or not the TAB PC 100 is mounted on the PC holder 12, and the process waits for mounting of the TAB PC 100. If the TAB PC 100 is mounted, the process proceed to step S12, in which a start command signal for starting a communication control program is transmitted to the TAB PC 100.

In step S13, the process waits for receiving a signal indicative of completion of starting the communication control program from the TAB PC 100. If the signal is received, the process proceeds to step S14, in which an initial image is displayed on the display screen of the TAB PC 100. As the initial image, a previouly set image (e.g., the image of FIG. 4A), or the image which was displayed in the latest operation, is used.

In step S15, it is determined whether or not a switching command for switching the displayed image is input (whether or not a switching command signal is received from the TAB PC 100). If the answer to step S15 is affirmative (YES), switching of the displayed image is performed (a signal for instructing the switching is transmitted to the TAB PC 100 )(step S16). In step S17, it is determined whether or not a pushing operation of the button shown in the display screen of the TAB PC 100 is performed. If the answer to step S17 is affirmative (YES), a control signal of the corresponding operation (for example, on/off switching of the air conditioner, preset temperature change of the air conditioner, etc.) is transmitted to another control device, or switching of the displayed image, for example, to the image of FIG. 5A or 5B is performed (step S18).

In step S19, it is determined whether or not an end flag FEND is "1", and while the answer is negative (NO), the process returns to step S15. The end flag FEND is set to "1", for example, when the power switch of the vehicle is turned off, or when the image switching command input or the operation input is not performed within a predetermined time period TWAIT after the TAB PC 100 is removed from the PC holder 12.

If the answer to step S19 is affirmative (YES), a signal for terminating operation of the communication control program of the TAB PC 100 is transmitted (step S20), and the process ends. That is, in this embodiment, operation of the communication control program of the TAB PC 100 is continued, while the operation input of the TAB PC 100 is performed at intervals shorter than the predetermined time period TWAIT, or until the Home key (a key for returning to the initial screen display) of the TAB PC 100 is operated, even after the TAB PC 100 is removed from the PC holder 12. Accordingly, a vehicle user seated on the rear seat, for example, can operate the air conditioner or the audio device function through the TAB PC 100 after removing from the PC holder 12, which enhances convenience of the vehicle users.

As described above, in this embodiment, the TAB PC 100 can be mounted so that the TAB PC 100 covers the vehicle meter panel 11 which is disposed in front of the driver's seat. In the state where the TAB PC 100 is mounted, the vehicle meter information is displayed in the first display region RD1 of the display screen of the TAB PC 100, and the functional information such as the map information is displayed in the second display region RD2 thereof. When the switching command of the functional information to be displayed in the second display region RD2 is received, switching of the functional information displayed in the second display region RD2 is performed. Accordingly, switching to a desired functional information image can easily be performed without using complex menu layers in the display screen of a limited display area, which enhances convenience of the vehicle users.

In this embodiment, the vehicle meter panel 11 corresponds to the vehicle meter, the TAB PC 100 corresponds to the tablet-type terminal device, the PC holder 12 corresponds to the terminal device mounting means, and the TAB PC 100 constitutes the command receiving means.

### Second Embodiment

In this embodiment, receiving of the switching command of the image displayed on the TAB PC 100 is performed using a camera which obtains an image of the operator's hand movement. This embodiment is the same as the first embodiment except for the points described below.

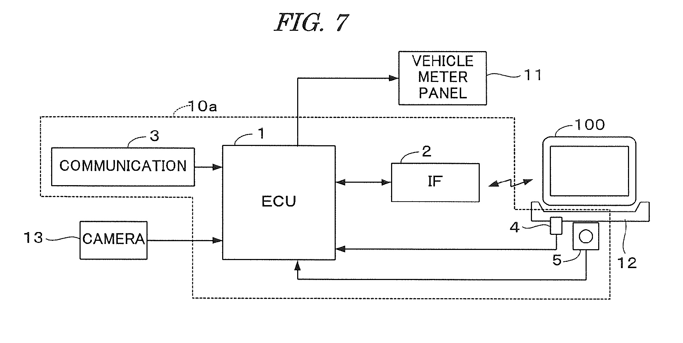

FIG. 7 is a block diagram showing a configuration of an image display control apparatus 10a and peripheral devices according to this embodiment. The image display control apparatus 10a is disposed in the vicinity of the PC holder 12, and is provided with an operation input camera 5 which is arranged to be able to obtain an image of the view toward the driver's seat.

Movement of the operator's (user's) hand is obtained by the operation input camera 5, and the ECU 1 controls to perform switching of the displayed image, when a predetermined movement of the hand is detected. It is preferable to detect a direction of movement (rightward or leftward movement) of the hand, to perform the switching control so that the switching is performed corresponding to the rightward flick operation and the leftward flick operation which are described above.

In this embodiment, the image switching command input is received by the operation input camera 5 and the ECU 1 of the image display control apparatus 10a, in step S15 of the display control process shown in FIG. 6.

According to this embodiment, the operator can perform the switching of the image displayed on the display screen of the TAB PC 100 without touching the display screen of the TAB PC 100.

In this embodiment, the operation input camera 5 and the ECU 1 constitute the command receiving means, and the ECU 1, the interface block 2, and the installation sensor 4 constitute the terminal device control means.

The present invention is not limited to the embodiments described above, and various modifications may be made. For example, in the embodiment described above, the interface block 2 performs the data communication to and from the TAB PC 100 by wireless communication. Alternatively, the data communication may be performed via connectors and/or wires. In such case, the connector for the communication is disposed on the PC holder 12.

Further, in the above-described first embodiment, the image switching command operation is performed by the flick operation. Alternatively, a camera of the TAB PC 100 may be disposed so as to be able to obtain an image of the user in the state where the TAB PC 100 is mounted on the PC holder 12, movement of the user's hand may be obtained by using the camera of the TAB PC 100, and the image switching may be performed when detecting a predetermined hand movement, like the second embodiment. Further alternatively, the image switching may be performed by operating a switch provided on the steering wheel of the vehicle, or a switch provided on the instrument panel of the vehicle.

Further, in the above-described embodiments, the communication control program for performing the data transmission to and from the image display control apparatus of the vehicle is previously installed in the TAB PC 100. Alternatively, when the TAB PC 100 in which the communication control program is not installed, is brought into the vehicle, the required communication control program may firstly be installed in the TAB PC 100, and thereafter the installed communication control program may be started.

In this modification, a step for installing the communication control program is inserted between steps S11 and S12 of FIG. 6, an image for questioning whether or not the installation is permitted is displayed in the display screen of the TAB PC 100, and the installation is performed after receiving an answer of permitting the installation.

According to this modification, even the TAB PC 100 in which the communication control program is not previously installed can be used as a display device of the vehicle meter information and other functional information.

Further, the tablet-type terminal device may not be limited to a personal computer, and devices such as a smart phone, a mobile navigation device, etc. may be used as the tablet-type terminal device. Further, in the embodiment described above, an example where the present invention is applied to a small electric vehicle is shown. The present invention is applicable to a car driven by an internal combustion engine, a hybrid car driven by an internal combustion engine and an electric motor, and the like.

Further, a remote control program for performing a remote control of the TAB PC 100 may previously be installed in a smart phone, or the remote control program may be transmitted from the image display control apparatus 10 to the smart phone and installed therein. When the TAB PC 100 is mounted on the PC holder 12, the remote control program of the smart phone may be started so that the vehicle user can perform the navigation operation, the audio-device operation, and/or the air conditioner operation using the remote control program of the smart phone.
An information display system for a vehicle, including an information display control apparatus and a tablet-type terminal device. The vehicle is provided with a vehicle meter for indicating the vehicle meter information in front of a driver's seat of the vehicle, and a terminal device holder which is capable of mounting the tablet-type terminal device so that the tablet-type terminal device covers the vehicle meter. The information display control apparatus performs display control for displaying the vehicle meter information and the functional information on a display screen of the tablet-type terminal device, when the tablet-type terminal device is mounted on the terminal device holder. The information display control apparatus performs a display control so that the functional information displayed in a second display region is switched while the display of the vehicle meter information in a first display region is maintained.

## Claims

1. An information display system for a vehicle, including an information display control apparatus and a tablet-type terminal device, said information display control apparatus performing control for displaying vehicle meter information regarding a condition of said vehicle, and a plurality of kinds of functional information including map information, and said vehicle being provided with a vehicle meter for indicating the vehicle meter information in front of a driver's seat of said vehicle,
**characterized in that**
said vehicle is provided with terminal device mounting means which is capable of mounting said tablet-type terminal device so that said tablet-type terminal device covers said vehicle meter,
wherein said tablet-type terminal device has command receiving means for receiving a switching command of the functional information, and
said information display control apparatus performs control of data transmission to and from said tablet-type terminal device and display control for displaying the vehicle meter information and the functional information on a display screen of said tablet-type terminal device, when said tablet-type terminal device is mounted on said terminal device mounting means,
wherein said information display control apparatus performs the display control so that the vehicle meter information is displayed in a first display region of the display screen of said tablet-type terminal device, and the functional information is displayed in a second display region of the display screen, and
said information display control apparatus performs the display control so that the functional information displayed in the second display region is switched while the display of the vehicle meter information is maintained, when said command receiving means receives the switching command.

2. The information display system according to claim 1, wherein said information display control apparatus changes a form of the boundary between the first display region and the second display region according to the functional information to be displayed in the second display region.

3. The information display system according to claim 1 or 2, wherein when displaying the map information in the second display region, said information display control apparatus displays the vehicle meter information on the upper side of the display screen and displays the map information below the vehicle meter information,
wherein said information display control apparatus displays the boundary between the vehicle meter information and the map information so that the boundary forms an upward convex arc.

4. The information display system according to any one of claims 1 to 3, wherein said command receiving means receives the switching command by detecting a moving direction of a hand moved in front of said tablet-type terminal device, and said information display control apparatus switches the functional information to be displayed in the second display region according to the detected direction of the hand movement.

5. The information display system according to any one of claims 1 to 4, wherein said information display control apparatus starts a communication control program of said tablet-type terminal device when said tablet-type terminal device is mounted on said terminal device mounting means, and performs the data transmission control with said communication control program,
wherein the started communication control program continues the data transmission control after said tablet-type terminal device is removed from said terminal device mounting means.

6. An information display control apparatus for a vehicle, which performs control for displaying vehicle meter information regarding a condition of said vehicle, and a plurality of kinds of functional information including map information, and said vehicle being provided with a vehicle meter for indicating the vehicle meter information in front of a driver's seat of said vehicle,
**characterized in that**
said vehicle is provided with terminal device mounting means which is capable of mounting said tablet-type terminal device so that said tablet-type terminal device covers said vehicle meter,
wherein said information display control apparatus includes:
command receiving means for receiving a switching command of the functional information; and
terminal device control means for performing control of data transmission to and from said tablet-type terminal device and display control for displaying the vehicle meter information and the functional information on a display screen of said tablet-type terminal device, when said tablet-type terminal device is mounted on said terminal device mounting means,
wherein said terminal device control means performs the display control so that the vehicle meter information is displayed in a first display region of the display screen of said tablet-type terminal device, and the functional information is displayed in a second display region of the display screen, and
said terminal device control means performs the display control so that the functional information displayed in the second display region is switched while the display of the vehicle meter information is maintained, when said command receiving means receives the switching command.
